(19) Europäisches Patentamt
European Patent Office
Office européen des brevets

(11) Veröffentlichungsnummer: **0 014 419**
**B1**

(12) # EUROPÄISCHE PATENTSCHRIFT

(45) Veröffentlichungstag der Patentschrift: **03.03.82**

(51) Int. Cl.³: **B 01 D 19/04**

(21) Anmeldenummer: **80100437.5**

(22) Anmeldetag: **29.01.80**

(54) **Im wesentlichen wasserfreie Antischaummittel.**

(30) Priorität: **30.01.79 DE 2903423**

(43) Veröffentlichungstag der Anmeldung: **20.08.80 Patentblatt 80/17**

(45) Bekanntmachung des Hinweises auf die Patenterteilung: **03.03.82 Patentblatt 82/9**

(84) Benannte Vertragsstaaten: **BE DE FR GB IT**

(56) Entgegenhaltungen:
**GB-A-1 197 254**
**US-A-2 797 198**
**US-A-3 249 550**
**US-A-3 423 340**
**US-A-3 723 342**
**US-A-4 136 045**

(73) Patentinhaber: **WACKER-CHEMIE GMBH, *Prinzregentenstrasse 22, D-8000 München 22 (DE)***

(72) Erfinder: **Pirson, Ewald, Dr., Dipl.-Chem., Holzfelder Weg 22, D-8263 Burghausen (DE)**
Erfinder: **Schmidlkofer, Jakob, Ahornweg 3, D-8261 Mehrins-Öd (DE)**
Erfinder: **Innertsberger, Ernst, Dipl.-Chem., Mehringer Strasse 56, D-8263 Burghausen (DE)**

**EP 0 014 419 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Im wesentlichen wasserfreie Antischaummittel

Es ist bekannt, bei der Verhinderung oder Bekämpfung von Schaum Antischaummittel auf Grundlage von mindestens zu 80 Molprozent aus Dikohlenwasserstoffsiloxaneinheiten bestehendem Organopolysiloxan, Füllstoff und Dispergiermittel in Form wässriger Dispersionen herzustellen und einzusetzen. Hierzu wird z. B. auf US-A-3650979, erschienen: 21. März 1972, H.-H. Steinbach et al., Farbenfabriken Bayer Aktiengesellschaft, verwiesen. Gegenüber solchen in Form von wässrigen Dispersionen nicht nur eingesetzten, sondern auch von vornherein hergestellten Antischaummitteln haben zumindest vor der endgültigen Verwendung im wesentlichen wasserfreie Antischaummitteln z. B. den Vorteil, dass sie weniger Aufwand für Lagerung und Transport benötigen. Gegenüber den bisher bekannten, zumindest vor der endgültigen Verwendung im wesentlichen wasserfreien Antischaummitteln auf Grundlage von mindestens zu 80 Molprozent aus Dikohlenwasserstoffsiloxaneinheiten bestehendem Organopolysiloxan, Füllstoff und Dispergiermittel haben die erfindungsgemässen zumindest vor der endgültigen Verwendung im wesentlichen wasserfreien Antischaummittel insbesondere den Vorteil, dass sie beständiger sind, sich also nach Lagerung, insbesondere bei höheren Temperaturen, nicht entmischen, und/oder beständigere Dispersionen in Wasser ergeben.

GB-A-1197254 betrifft nur Antischaummittel, die in Form wässriger Dispersionen hergestellt und eingesetzt werden. In dieser Druckschrift ist auf Seite 1, Zeilen 62 bis 67 angegeben, dass Schutzkolloide verschiedenster Art zur Stabilisierung von Organopolysiloxanemulsionen mit geringer Stabilität, aber guter Entschäumungswirkung nicht geeignet sind. Dementsprechend wird gemäss dieser Druckschrift im Gegensatz zur Angabe auf Seite 1, Zeilen 57 bis 61 gemeinsam mit Salz des Isethionsäureesters kein Schutzkolloid, sondern oberflächenaktiver Emulgator eingesetzt (vgl. Seite 1, Zeilen 50 bis 53). Wasserlösliche Cellulosederivate sind dagegen Schutzkolloide und somit nicht oberflächenaktiv. Ausserdem beträgt erfindungsgemäss die obere Grenze der Menge von Salz von Isethionsäureester höchstens etwa 50 Gewichtsprozent der Untergrenze der Menge von Salz von Isethionsäureester, die gemäss GB-A-1197254 eingesetzt wird. Eine stabilisierende Wirkung konnte von einer derartig geringen Menge von Salz des Isethionsäureesters aufgrund dieser Druckschrift nicht erwartet werden. GB-A-1197254, welche übrigens der eingangs genannten US-A- entspricht, konte daher den Gegenstand der Erfindung nicht nahelegen.

Gegenstand der Erfindung sind Antischaummittel auf Grundlage von mindestens zu 80 Molprozent aus Dikohlenwasserstoffsiloxaneinheiten bestehendem Organopolysiloxan und Füllstoff sowie einem Gehalt an mindestens einer Verbindung der allgemeinen Formel

$$RCOO(CH_2)_2SO_3M,$$

worin R einen aliphatischen Kohlenwasserstoffrest mit mindestens 8 Kohlenstoffatomen und M eine Ammoniumgruppe oder ein Alkalimetallatom bedeutet, mit der Massgabe, dass mindestens 10% der Anzahl der Reste R mindestens 11 Kohlenstoffatome enthalten, dadurch gekennzeichnet, dass sie zumindest vor ihrer endgültigen Verwendung im wesentlichen wasserfrei sind,
zusätzlich zu der Verbindung der vorstehend angegebenen Formel wenigstens ein wasserlösliches Cellulosederivat,
und die Verbindung der allgemeinen Formel

$$RCOO(CH_2)_2SO_3M$$

in Mengen von 5 bis 25 Gewichtsprozent, bezogen auf das Gesamtgewicht von Organopolysiloxan, Füllstoff, wasserlöslichem Cellulosederivat und Verbindung der allgemeinen Formel

$$RCOO(CH_2)_2SO_3M,$$

enthalten.

Die zur Bereitung der erfindungsgemässen Antischaummittel eingesetzten, mindestens zu 80 Molprozent aus Dikohlenwasserstoffsiloxaneinheiten bestehenden Organopolysiloxane können die gleichen mindestens zu 80 Molprozent, vorzugsweise mindestens zu 99 Molprozent, aus Dikohlenwasserstoffsiloxaneinheiten bestehenden Organopolysiloxane sein, die auch bisher zur Bereitung von Antischaummitteln auf Grundlage von Organopolysiloxanen verwendet werden konnten. Bevorzugt sind solche Organopolysiloxane, die aus Einheiten der allgemeinen Formel

$$R'_nSiO_{\frac{4-n}{2}},$$

worin R′ gleiche oder verschiedene Kohlenwasserstoffreste mit 1 bis 18 Kohlenstoffatomen bedeutet und n 0, 1, 2 oder 3, durchschnittlich 1,8 bis 2,2, ist, natürlich mit der Massgabe, dass mindestens 80 Molprozent dieser Einheiten $R'_2SiO$-Einheiten sind, aufgebaut sind.

Vorzugsweise sind wegen der leichteren Zugänglichkeit mindestens 90% der Anzahl der Reste R′ Methylreste. Weitere Beispiele für Kohlenwasserstoffreste R′ sind der Äthylrest, der 2-Phenylpropylrest und Octadecylreste. Vorzugsweise sind die Kohlenwasserstoffreste R′ frei von aliphatischen Mehrfachbindungen. Das schliesst jedoch nicht aus, dass bei linearen Organopolysiloxanen in den endständigen Einheiten auch z. B. Vinylreste, wie in der Vinyldimethylsiloxygruppe,

vorliegen könen. Selbstverständlich kann ein Teil der Siloxansauerstoffatome in der oben angegebenen Formel durch Gruppen der allgemeinen Formel OR″, wobei R″ inen Alkylrest mit 1 bis 5 Kohlenstoffatomen, einschliesslich dem tert.-Butylrest, oder einen Arylrest, insbesondere den Phenylrest, oder Wasserstoff bedeutet, ersetzt sein.

Vorzugsweise beträgt die Viskosität von mindestens zu 80 Molprozent aus Dikohlenwasserstoffsiloxaneinheiten bestehendem Organopolysiloxan 35 bis 500 000 $mm^2s^{-1}$ bei 25 °C, insbesondere 50 bis 20 000 $mm^2s^{-1}$ bei 25 °C.

Falls erwünscht, können Gemische aus verschiedenen, mindestens zu 80 Molprozent aus Dikohlenwasserstoffsiloxaneinheiten bestehenden Organopolysiloxanen eingesetzt werden.

Als Füllstoffe können ebenfalls auch im Rahmen der Erfindung alle Füllstoffe verwendet werden, die bisher zur Bereitung von Antischaummittel auf Grundlage von Organopolysiloxan und Füllstoff verwendet werden konnten. Beispiele für solche Füllstoffe sind Oxyde von Silicium, Magnesium oder Zink, wobei die Teilchengrösse dieser Oxyde vorzugsweise höchstens 25 Mikrometer beträgt, wie pyrogen erzeugtes oder gefälltes Siliciumdioxyd, Salze von Elementen der II. oder III. Gruppe des Periodensystems nach Mendeleeff mit einer Ordnungszahl von von 12 bis 30 mit 12 bis 22 Kohlenstoffatome aufweisenden, aliphatischen einbasischen Carbonsäuren oder Hydroxycarbonsäuren, wie Calciumstearat und Calcium-12-hydroxystearat, sowie Produkte, die mindestens bei der jeweiligen Anwendungstemperatur des Antischaummittels fest und durch Umsetzung von mindestens einem einwertigen oder mehrwertigen Isocyanat mit mindestens einer organischen Verbindung, die mindestens ein gegenüber der Isocyangruppe reaktionsfähiges Wasserstoffatom enthält, hergestellt worden sind, wie das Produkt der Umsetzung von Naphthylendiisocyanat mit Cyclohexylamin. Vorzugsweise ist die Herstellung der letztgenannten Art von Füllstoffen in Gegenwart des mindestens zu 80 Molprozent aus Dikohlenwasserstoffsiloxaneinheiten bestehenden Organopolysiloxans erfolgt. Weitere Beispiele für im Rahmen der Erfindung geeignete Füllstoffe sind Lithiumstearat, Magnesiumsilikat und Magnesiumaluminiumsilikat.

Falls erwünscht, können Gemische aus verschiedenen Füllstoffen verwendet werden.

Füllstoff wird vorzugsweise in Mengen von 0,1 bis 30 Gewichtsprozent, insbesondere 0,2 bis 20 Gewichtsprozent, jeweils bezogen auf das Gewicht der Organopolysiloxane, eingesetzt.

Als wasserlösliche Cellulosederivate sind im Rahmen der Erfindung solche bevorzugt, die in 2 gewichtsprozentiger Lösung bei 25 °C eine Viskosität von 10 bis 10 000 mPa·s, besitzen. Beispiele für solche wasserlöslichen Cellulosederivate sind bzw. können sein Natrium- oder Kaliumsalze von Celluloseestern, wie Cellulosesulfat, und Celluloseäther, wie Natriumcarboxymethylcellulose, Natriumcarboxyäthylcellulose, Natrium-Celluloseäthansulfonsäure, Methylcellulose, Hydroxyäthylmethylcellulose, Hydroxypropylmethylcellulose, Hydroxyäthylcellulose, Hydroxypropylcellulose, Hydroxyäthyl-natriumcarboxymethylcellulose, Äthylcellulose und Natriumcarboxymethylmethylcellulose. Bevorzugt sind Methylcellulose und die vorstehend genannten, Natrium und Carboxymethylgruppen enthaltenden Cellulosederivate, insbesondere Natriumcarboxymethylcellulose.

Falls erwünscht, können Gemische aus verschiedenen, wasserlöslichen Cellulosederivaten eingesetzt werden.

Vorzugsweise wird wasserlösliches Cellulosederivat in Mengen von 2 bis 30 Gewichtsprozent, insbesondere 10 bis 25 Gewichtsprozent, jeweils bezogen auf das Gesamtgewicht von Organopolysiloxan, wasserlöslichem Cellulosederivat, Füllstoff und Verbindung der allgemeinen Formel

$$RCOO(CH_2)_2SO_3M,$$

eingesetzt.

Die gemeinsam mit wasserlöslichem Cellulosederivat eingesetzten Dispergiermittel sind Salze von Estern aliphatischer Carbonsäuren, die mindestens 9 Kohlenstoffatome aufweisen, mit Isäthionsäure. Der Rest R kann geradkettig oder verzweigt sein. Vorzugsweise ist er geradkettig. Weiterhin kann der Rest R gesättigt sein oder mindestens eine aliphatische Mehrfachbindung enthalten. Vorzugsweise weist der Rest R 12 bis 19 Kohlenstoffatome auf. Einzelne Beispiele für Reste RCOO- sind der Lauroyl-, Myristoyl-, Palmityl-, Stearoyl-, Palmitooleyl- und Oleylrest sowie der Cocosfettsäurerest. Besonders bevorzugt sind der Stearoyl- und der Oleylrest als Reste RCOO–.

Beim Alkalimetallatomen M kann es sich um Lithium, Natrium, Kalium, Rubidium oder Cäsium handeln. Wegen der leichteren Zugänglichkeit ist als M Natrium bevorzugt.

Falls erwünscht, können Gemische aus verschiedenen Verbindungen der allgemeinen Formel $RCOO(CH_2)_2SO_3M$ eingesetzt werden.

Vorzugsweise enthalten die erfindungsgemässen Antischaummittel Verbindung der allgemeinen Formel $RCOO(CH_2)_2SO_3M$ in Mengen von 10 bis 18 Gewichtsprozent, bezogen auf das Gesamtgewicht von Organopolysiloxan, Füllstoff, wasserlöslichem Cellulosederivat und Verbindung der allgemeinen Formel $RCOO(CH_2)_2SO_3M$.

Die Herstellung der erfindungsgemässen Antischaummittel kann durch Vermischen von mindestens zu 80 Molprozent aus Dikohlenwasserstoffsiloxaneinheiten bestehendem Organopolysiloxan, Füllstoff, wasserlöslichem Cellulosederivat und Verbindung der allgemeinen Formel $RCOO(CH_2)_2SO_3M$ in beliebiger Reihenfolge erfolgen. Dieses Vermischen kann von Hand oder mittels beliebiger Rührvorrichtungen, wie Blatt- oder Scheibenführern oder Planetenmischern, durchgeführt werden. Weil dies den geringsten Aufwand erfordert, wird die Herstellung der erfindungsgemässen Antischaummittel vorzugsweise bei Raumtemperatur und dem Druck der umgebenden Atmosphäre durchgeführt. Falls erwünscht, können jedoch auch höhere oder niedrigere Temperaturen sowie höhere oder niedrigere Drücke bei der Herstellung der erfindungsgemässen Antischaummittel angewandt werden. Temperaturen über 60 °C sind jedoch nicht bevorzugt.

Ein Zusatz von Wasser ist auch bei der Herstellung der erfindungsgemässen Antischaummittel zumindest nicht erforderlich.

Die erfindungsgemässen Antischaummittel können vom Verbraucher unverdünnt zur Verhinderung oder Bekämpfung von Schaum angewandt oder vom Verbraucher vor ihrer endgültigen Verwendung zu beliebiger Konzentration mit Wasser bei beliebigen Temperaturen zwischen dem Schmelzpunkt und dem Siedepunkt des Wassers, insbesondere bei 10 bis 30 °C, von Hand oder mittels einfacher Mischvorrichtungen, z. B. den oben genannten Mischvorrichtungen oder einem Flügelrührer, verdünnt werden. Die mit Wasser verdünnten, erfindungsgemässen Antischaummittel sind auch bei einer Konzentration von beispielsweise 5 Gewichtsprozent lagerbeständig. Weiterhin sind die mit Wasser verdünnten, erfindungsgemässen Antischaummittel koch- und elektrolytbeständig, so dass sie besonders vielseitig angewendet werden können.

Die erfindungsgemässen Antischaummittel können zur Verhinderung oder Bekämpfung von Schaum nicht nur, jedoch insbesondere auf bzw. in wässrigen Lösungen eingesetzt werden, z. B. als Zusätze zu Waschmitteln bzw. einem oder mehreren Bestandteilen der Waschmittel, wie Natriumtripolyphosphat und/oder Natriumperborat, weiterhin z. B. bei der Eindampfung von alkalischen Ablaugen der Papierindustrie, der Konzentrierung von Kautschuk-Latices, bei Schneidölemulsionen in der metallverarbeitenden Industrie, in Dispersionsfarben und anderen Anwendungen von Kunstharzdispersionen, in Schmiermitteln, bei der Erdölförderung, Textilfärbung, einschliesslich der Jet-Färbung, Abwasseraufbereitung, Gärprozessen, wie Antibiotika-Herstellung, und Erzflotation.

In den folgenden Beispielen beziehen sich alle Angaben von Prozentsätzen auf das Gewicht soweit nichts anderes angegeben ist.

Beispiel 1

2,5 kg eines Gemisches aus 95% eines durch Trimethylsiloxygruppen endblockierten Dimethylpolysiloxans mit einer Viskosität von 350 $mm^2s^{-1}$ bei 25 °C und 5% pyrogen erzeugtem Siliciumdioxyd (fume silica) mit einer BET-Oberfläche von etwa 150 $m^2/g$ werden innerhalb von 15 Minuten mit 600 g Natriumsalz von Stearoylisäthionsäure in einem Planetenmischer vermischt. In das so erhaltene Gemisch wird in der gleichen Mischvorrichtung innerhalb von 12 Minuten 1 kg Natriumcarboxymethylcellulose, deren 2%ige wässrige Lösung bei 25 °C eine Viskosität von 200 mPa·s hat, eingemischt. Aus dem so erhaltenen, zumindest vor der endgültigen Verwendung im wesentlichen wasserfreien Antischaummittel wird in einem Rührwerk mit Flügelrührer durch Zugabe von 96 l destilliertem Wasser eine Emulsion erhalten, die sehr beständig ist und gut zur Verhinderung und Bekämpfung von Schaum geeignet ist.

Beispiel 2

3,2 kg eines Gemisches aus 90% eines durch Trimethylsiloxygruppen endblockierten Dimethylpolysiloxans mit einer Viskosität von 1000 $mm^2s^{-1}$, 5% pyrogen erzeugtem Siliciumdioxyd mit einer BET-Oberfläche von etwa 150 $m^2/g$ und 5% Calciumstearat werden innerhalb von 12 Minuten mit 500 g Natriumsalz von Stearoylisäthionsäure in dem Planetenmischer vermischt. In das so erhaltene Gemisch wird in der gleichen Mischvorrichtung innerhalb von 12 Minuten 300 g Methylcellulose, deren 2%ige wässrige Lösung bei 25 °C eine Viskosität von 1100 mPa·s hat, eingemischt. Aus dem so erhaltenen, zumindest vor der endgültigen Verwendung im wesentlichen wasserfreien Antischaummittel wird in einem Rührwerk mit Flügelrührer durch Zugabe von 120 l destilliertem Waser eine Emulsion erhalten, die sehr beständig ist und gut zur Verhinderung und Bekämpfung von Schaum geeignet ist.

**Patentansprüche**

1. Antischaummittel auf Grundlage von mindestens zu 80 Molprozent aus Dikohlenwasserstoffsiloxaneinheiten bestehendem Organopolysiloxan und Füllstoff sowie einem Gehalt an mindestens einer Verbindung der allgemeinen Formel

$RCOO(CH_2)_2SO_3M$,

worin R einen aliphatischen Kohlenwasserstoffrest mit mindestens 8 Kohlenstoffatomen und M eine Ammoniumgruppe oder ein Alkalimetallatom bedeutet, mit der Massgabe, dass mindestens 10% der Anzahl der Reste R mindestens 11 Kohlenstoffatome enthalten, dadurch gekennzeichnet, dass sie zumindest vor ihrer endgültigen Verwendung im wesentlichen wasserfrei sind, zusätzlich zu der Verbindung der vorstehend angegebenen Formel wenigsten ein wasserlösliches Cellulosederivat,
und die Verbindung der allgemeinen Formel

$RCOO(CH_2)_2SO_3M$

in Mengen von 5 bis 25 Gewichtsprozent, bezogen auf das Gesamtgewicht von Organopolysiloxan, Füllstoff, wasserlöslichem Cellulosederivat und Verbindung der allgemeinen Formel

$RCOO(CH_2)_2SO_3M$,

enthalten.

2. Antischaummittel nach Anspruch 1, dadurch gekennzeichnet, dass sie die Verbindungen der allgemeinen Formel

$RCOO(CH_2)_2SO_3M$

in Mengen von 10 bis 18 Gewichtsprozent, bezogen auf das Gesamtgewicht von Organopolysiloxan, Füllstoff, wasserlöslichem Cellulosederivat und Verbindung der allgemeinen Formel

$RCOO(CH_2)_2SO_3M$,

enthalten.

3. Antischaummittel nach Anspruch 1 oder 2, dadurch gekennzeichnet, dass sie das (die) wasserlöslichen Cellulosederivat(e) in Mengen von 2 bis 30 Gewichtsprozent, bezogen auf das Gesamtgewicht von Organopolysiloxan, wasserlöslichem Cellulosederivat und Verbindung der allgemeinen Formel

$RCOO(CH_2)_2SO_3M$,

enthalten.

**Claims**

1. Anti-foaming agents based on an organopolysiloxane comprising at least 80 mole % of dihydrocarbonsiloxane units, a filler and at least one compound of the general formula

$RCOO(CH_2)_2SO_3M$,

in which R denotes an aliphatic hydrocarbon radical having at least 8 carbon atoms and M denotes an ammonium group or an alkali metal atom, with the proviso that at least 10% of the number of radicals R contain at least 11 carbon atoms, characterised in that, at least before their final use, they are substantially free of water, that they contain, in addition to the compound of the formula given above, at least one water-soluble cellulose derivative, and that they contain the compound of the general formula

$RCOO(CH_2)_2SO_3M$

in quantities of from 5 to 25% by weight, based on the total weight of the organopolysiloxane, filler, watersoluble cellulose derivative and compound of the general formula

$RCOO(CH_2)_2SO_3M$.

2. Anti-foaming agents according to claim 1, characterised in that they contain the compounds of the general formula

$RCOO(CH_2)_2SO_3M$

in quantities of from 10 to 18% by weight, based on the total weight of the organopolysiloxane, filler, watersoluble cellulose derivative and compound of the general formula

$RCOO(CH_2)_2SO_3M$.

3. Anti-foaming agents according to claim 1 or 2, characterised in that they contain the water-soluble cellulose derivative(s) in quantities of from 2 to 30% by weight, based on the total weight of the organopolysiloxane, water-soluble cellulose derivative and compound of the general formula

$RCOO(CH_2)_2SO_3M$.

**Revendications**

1. Antimousse à base d'un polyorganosiloxane consistant pour au moins 80 moles % en des motifs bis-hydrocarbyl-siloxane et d'une charge et contenant également au moins un composé de formule générale:

$RCOO(CH_2)_2SO_3M$,

dans laquelle R est un radical d'hydrocarbure aliphatique comportant au moins 8 atomes de carbone et M est un groupe ammonium ou un atome de métal alcalin, étant bien entendu qu'au moins 10% du nombre des radicaux R contiennent au moins 11 atomes de carbone), caractérisés en ce qu'au moins avant leur utilisation finale ils sont essentiellement sans eau et en ce que, en plus du composé répondant à la formule ci-dessus, ils contiennent au moins un dérivé hydrosoluble de la cellulose et en ce qu'ils contiennent le composé de formule générale:

$RCOO(CH_2)_2SO_3M$

en des quantités de 5 à 25% en poids, par rapport au poids total du polyorganosiloxane, de la charge, du dérivé hydrosoluble de la cellulose et du composé de formule générale:

$RCOO(CH_2)_2SO_3M$

2. Antimousse selon la revendication 1, caractérisés en ce qu'ils contiennent les composés de formule générale:

$RCOO(CH_2)_2SO_3M$

en des quantités de 10 à 18% en poids, par rapport au poids total du polyorganosiloxane, de la charge, du dérivé hydrosoluble de la cellulose et du composé de formule générale:

$RCOO(CH_2)_2SO_3M$

(dans laquelle R et M ont le sens précité).

3. Antimousse selon l'une des revendications 1 et 2, caractérisés en ce qu'ils contiennent le ou les dérivés hydrosolubles de la cellulose en des quantités de 2 à 30% en poids, par rapport au poids total du polyorganosiloxane, du dérivé hydrosoluble de la cellulose et du composé de formule générale:

$RCOO(CH_2)_2SO_3M$,

(dans laquelle les symboles R et M ont le sens précité).